# EUROPÄISCHE PATENTANMELDUNG

(11) **EP 1 747 928 A1**
(43) Veröffentlichungstag der Anmeldung: **31.01.2007**
(21) Anmeldenummer: 05016404.5
(22) Anmeldetag: 28.07.2005
(51) Int. Cl.: B60J 7/02

(54) **Schlittensystem eines verfahrbaren Sonnenschutzes in einem Kraftfahrzeug**

(71) Anmelder: ArvinMeritor GmbH, 63128 Dietzenbach (DE)
(72) Erfinder: Grimm, Rainer, 60598 Frankfurt (DE); Roder, Joachim, 63165 Mühlheim (DE); Riess, Claudia, 64405 Lichtenberg (DE); Röhnke, Manfred, 63322 Rödermarks (DE)
(74) Vertreter: Kitzhofer, Thomas

(57) **Zusammenfassung**

Ein Schlittensystem (10) eines Sonnenschutzes in einem Kraftfahrzeug, hat einen Schlitten (14), der ein Führungsstück (16) und ein Verbindungsstück (18) aufweist, wobei das Führungsstück (16) zerstörungsfrei lösbar mit dem Verbindungsstück (18) gekoppelt ist.

## Beschreibung

Die Erfindung betrifft ein Schlittensystem eines verfahrbaren Sonnenschutzes in einem Kraftfahrzeug.

Sonnenschutzsysteme, zum Beispiel Rollos oder Schiebehimmel die etwa in Verbindung mit einem Schiebedach oder einem Glasdach eingesetzt werden, werden in manuell betätigbarer und in elektrisch angetriebener Form angeboten.

Bei der elektrisch angetriebenen Version wird der Spriegel des Rollos mit einem in einer Führungsschiene verlaufenden Antriebskabel verbunden. Durch Bewegung des drucksteif geführten Kabels in der Führung durch einen Motor bestimmt sich die Position des Rollospriegels. Bei manuell betätigten Rollos wird der Spriegel von Hand verschoben, wobei die Enden des Spiegels über in der Führungsschiene aufgenommene Schlitten geführt sind.

Die Erfindung verbessert die Kosteneffizienz eines Sonnenschutzsystems.

Bei einem Schlittensystem eines Sonnenschutzes in einem Kraftfahrzeug ist dazu ein Schlitten vorgesehen, der ein Führungsstück und ein Verbindungsstück zum Sonnenschutz aufweist, wobei das Führungsstück zerstörungsfrei lösbar mit dem Verbindungsstück gekoppelt ist. Das Führungsstück ist ein vom Verbindungsstück separates Bauteil. So läßt sich eine Basisform des Schlittens sowohl für manuell betätigte als auch für elektrisch angetriebene Sonnenschutzsysteme verwenden. Außerdem läßt sich der Sonnenschutz auf diese Weise leicht demontieren, da das Verbindungsstück vom Führungsstück abkoppelbar ist, wodurch das Verbindungsstück aus einer Führungsschiene entnommen werden kann, während das Führungsstück in der Führungsschiene verbleibt.

Ist ein elektrisches Antriebssystem für den Sonnenschutz vorgesehen, ist vorzugsweise das Führungsstück mit einem Antriebskabel verbunden. Auf diese Weise ist es möglich, das Verbindungsstück und einen damit verbundenen Sonnenschutz auszubauen, ohne ein eventuell vorhandenes Antriebssystem ebenfalls entfernen zu müssen, da das Antriebskabel zusammen mit dem Führungsstück in einer Führungsschiene verbleiben kann.

Bevorzugt ist am Führungsstück ein Rastelement ausgebildet ist, das so gestaltet ist, daß es mit einem am Verbindungsstück ausgebildeten Rastabschnitt eine Rastverbindung eingehen kann, die das Führungsstück am Verbindungsstück befestigt.

Bei Verwendung eines elektrischen Antriebs ist vorzugsweise ein Ende des Antriebskabels unlösbar mit dem Führungsstück verbunden, zum Beispiel durch Vergießen oder Umspritzen.

Bevorzugt ist der Sonnenschutz ein Rollo. Es kann jedoch auch ein Schiebehimmel eingesetzt werden.

Da normalerweise der Schlitten in einer Führungsschiene aufgenommen ist, wird vorteilhaft die Rastverbindung in einer Verschieberichtung des Schlittens geschlossen.

Das Rastelement kann zum Beispiel eine Zunge aufweisen, die in einer Richtung senkrecht zur Verschieberichtung auslenkbar ist. Die Auslenkung dieser Zunge kann sowohl zur Herstellung als auch zur Lösung der Rastverbindung eingesetzt werden.

Wenn der Schlitten in der Führungsschiene angeordnet ist, sichert bevorzugt die Führungsschiene Führungsstück und Verbindungsstück quer zur Verschieberichtung aneinander und kann auch ein Lösen der Rastverbindung in einer Richtung senkrecht zur Verschieberichtung verhindern. Hierbei kann die Schiene sowohl in einer z-Richtung des Fahrzeugs als auch einer y-Richtung des Fahrzeugs, die beide zur Verschiebungsrichtung des Schlittens in x-Richtung des Fahrzeugs senkrecht stehen, wirken.

In einer bevorzugten Ausführungsform ist das Rastelement einstückig mit dem Führungsstück ausgebildet.

Die einstückige Fertigung des Rastelements mit dem Führungsstück sowie die einfache Anbindung des Kabels am Führungsstück sind besonders einfach, wenn zumindest das Führungsstück, bevorzugt aber der ganze Schlitten aus einem geeigneten Kunststoff besteht.

Die Erfindung wird im folgenden unter Bezug auf die beigefügten Zeichnungen näher beschrieben. In der Zeichnung zeigen:
- Figur 1 eine schematische Ansicht eines erfindungsgemäßen Schlittensystems;
- Figur 2 eine dreidimensionale Ansicht eines erfindungsgemäßen Schlittensystems;

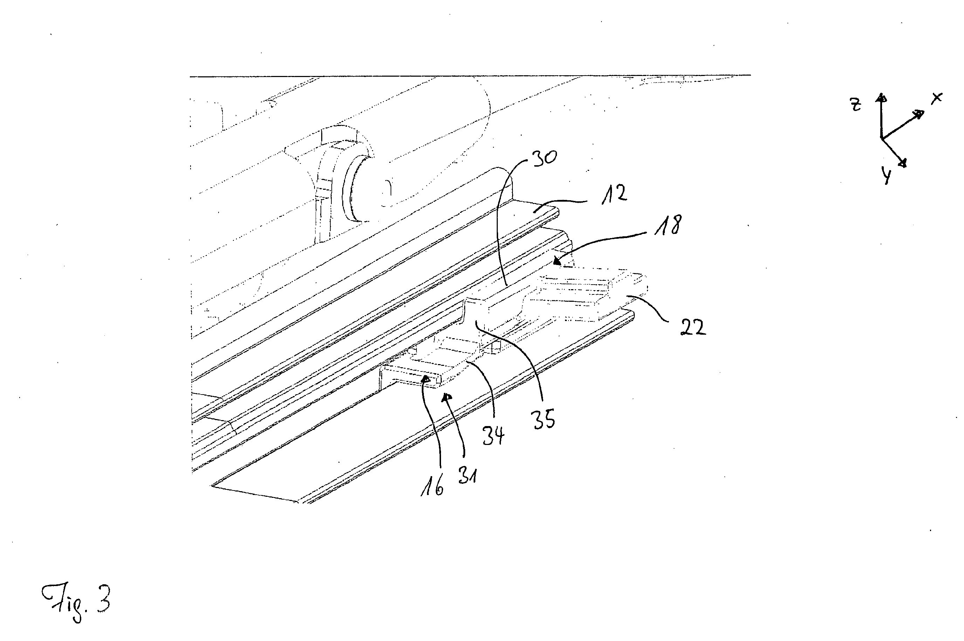

- Figuren 3 und 4 weitere Ansichten des erfindungsgemäßen Schlittensystems;
- Figuren 5 bis 9 Ansichten eines Führungsstücks eines erfindungsgemäßen Schlittensystems; und
- Figur 10 eine perspektivische Ansicht eines erfindungsgemäßen Schlittensystems.

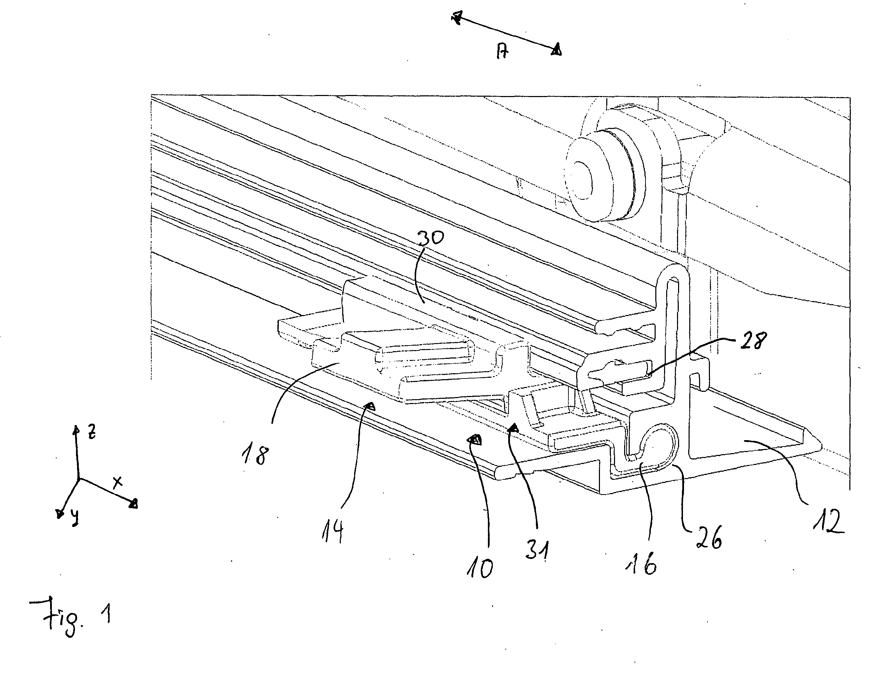

In Figur 1 ist ein Schlittensystem 10 dargestellt, das zur Bewegung eines (nicht dargestellten) Sonnenschutzrollos in einem Kraftfahrzeug dient. Ein solches Rollo ist meist unter einem ebenfalls nicht dargestellten Schiebedach des Fahrzeugs angebracht.

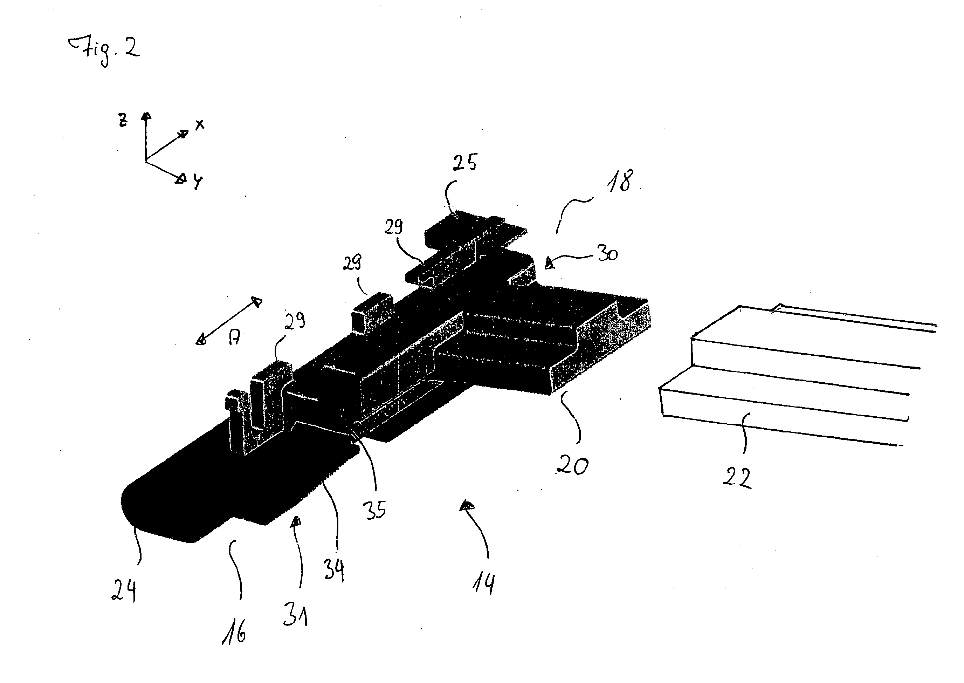

In zwei Führungsschienen 12, von denen nur eine gezeigt ist und die parallel zueinander in Fahrzeuglängsrichtung längs des Daches verlaufen, sind mehrere Führungen ausgebildet. In der Führungsschiene 12 ist ein Schlitten 14 in Verschieberichtung A verschiebbar aufgenommen. Der Schlitten 14 besteht aus zwei Teilen, einem Führungsstück 16 und einem Verbindungsstück 18. Dies ist näher in Figur 2 gezeigt.

Das Verbindungsstück 18 weist einen senkrecht zur Verschieberichtung A weisenden Fortsatz 20 auf, auf den ein Spriegel 22 eines Rollos aufgesteckt werden kann, wie dies in Figur 2 angedeutet ist.

Das Führungsstück 16 weist einen in Verschieberichtung A verlaufenden, verdickten Abschnitt 24 auf, der an einer Längsseite des Schlitten 14 angeordnet ist. Der verdickte Abschnitt 24 ist in einer ersten Führung 26 der Führungsschiene 12 aufgenommen. Das Führungsstück 16 ist nur in Verschieberichtung A, nicht aber in einer anderen Richtung (also z- bzw. y-Richtung) bewegbar.

Auch das Verbindungsstück 18 weist einen Vorsprung 25 auf, der bei montiertem Schlitten 14 in einer oberhalb der ersten Führung 26 gelegenen zweiten Führung 28 aufgenommen ist. Der Vorsprung 25 ist auf derselben Seite des Schlittens 14 angeordnet wie der verdickte Abschnitt 24. Weitere senkrecht zur Verschieberichtung A sowie zur Richtung des Vorsprungs 25 stehende (also in z-Richtung weisende) Vorsprünge 29 sind auch in der zweiten Führung 28 aufgenommen und verhindern auch eine Bewegung des Schlittens 14 in einer Richtung senkrecht zur Verschieberichtung A.

Das Verbindungsstück 18 ist mit dem Führungsstück 16 über eine Rastverbindung fest verbunden.

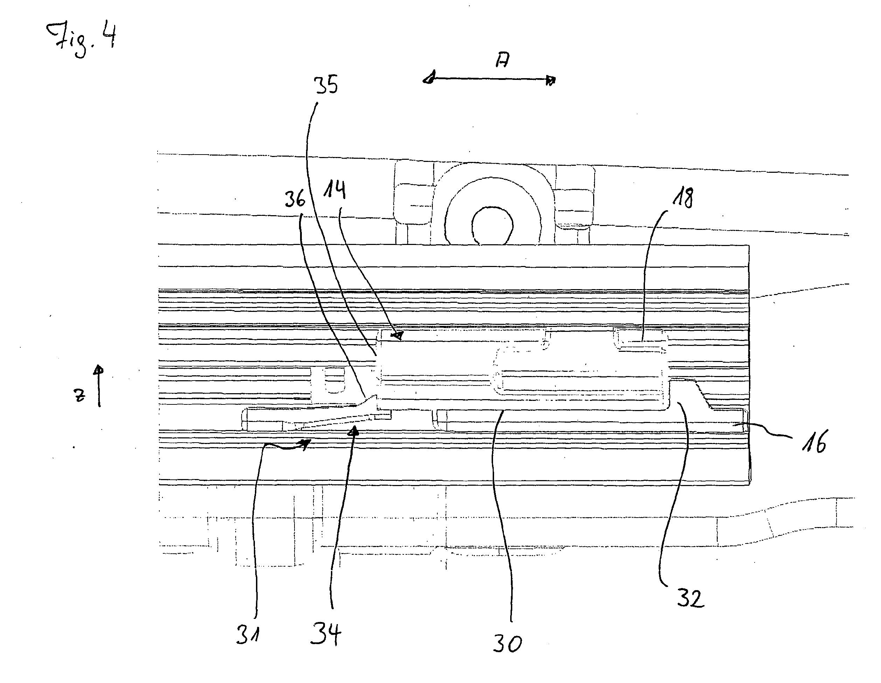

Wie zum Beispiel in Figur 4 zu erkennen ist, hat das Verbindungsstück 18 einen blockförmigen Rastabschnitt 30, der zur Befestigung des Verbindungsstücks 18 am Führungsstück 16 dient. Das Führungsstück 16 weist ein zum Rastabschnitt 30 komplementäres Rastelement 31 auf. Ein Anschlag 32, der an der vorderen Stirnseite des Rastabschnitts 30 des Verbindungsstücks 18 anliegt, bildet einen ersten Abschnitt des Rastelements 31 ist. An der hinteren Stirnseite 35 des Rastabschnitts 30 greift als zweiter Abschnitt des Rastelements 31 eine an einer Zunge 34 am Führungsstück 16 ausgebildete Anlagefläche an. Die Zunge 34 ist lediglich in z-Richtung auslenkbar und weist an ihrem vom Rastabschnitt 30 abgewandten Ende eine schräge Auslenkfläche 36 auf. In z-Richtung ist unterhalb der Zunge 34 ein Raum ausgespart, so daß sich diese über einen genügenden Hub frei bewegen kann.

Von der Seite der Zunge 34 kommend kann das Verbindungsstück 18 also in Verschieberichtung A auf das Führungsstück 16 aufgeschoben werden, wobei die Zunge 34 durch Kontakt des Verbindungsstücks 18 mit der Auslenkfläche 36 in negativer z- Richtung nach unten ausgelenkt wird. Hat die hintere Stirnseite 35 des Rastabschnitts 30 des Verbindungsstücks 18 die Auslenkfläche 36 passiert, schwenkt die Zunge 34 in positiver z-Richtung zurück und fixiert mittels der Anlagefläche den Rastabschnitt 30 und damit das Verbindungsstück 18.

Zum Lösen der Rastverbindung wird die Zunge 34 zum Beispiel mit Hilfe eines geeigneten Werkzeugs wie eines Schraubendrehers in negativer z-Richtung herunter gedrückt und das Verbindungsstück 18 entgegen der Verschieberichtung A verschoben, bis es aus der Rastverbindung gelöst ist. Nun kann das Verbindungsstück 18 mit dem daran befestigten Spriegel 22 und dem daran hängenden Rollo unabhängig vom Führungsstück 16 in der Führungsschiene 12 verschoben werden und schließlich an deren Stirnende aus der Führungsschiene 12 entnommen werden. Die Führungsschiene 12 kann z.B. eine nicht gezeigte Montage- bzw. Demontagestelle aufweisen, die so ausgebildet ist, daß der Schlitten 14 senkrecht zur Verschieberichtung A, etwa in z-Richtung, aus der Führungsschiene 12 herausgehoben werden kann. Alternativ kann die Entnahme des Schlittens 14 in Verschieberichtung A erfolgen.

Der gerade beschriebene Schlitten 14 ist für eine Verwendung mit einem manuell betätigten Sonnenschutz vorgesehen.

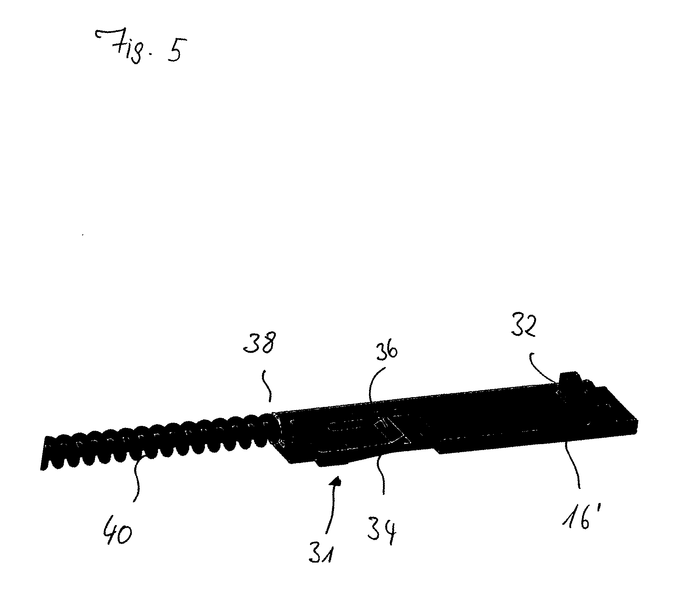

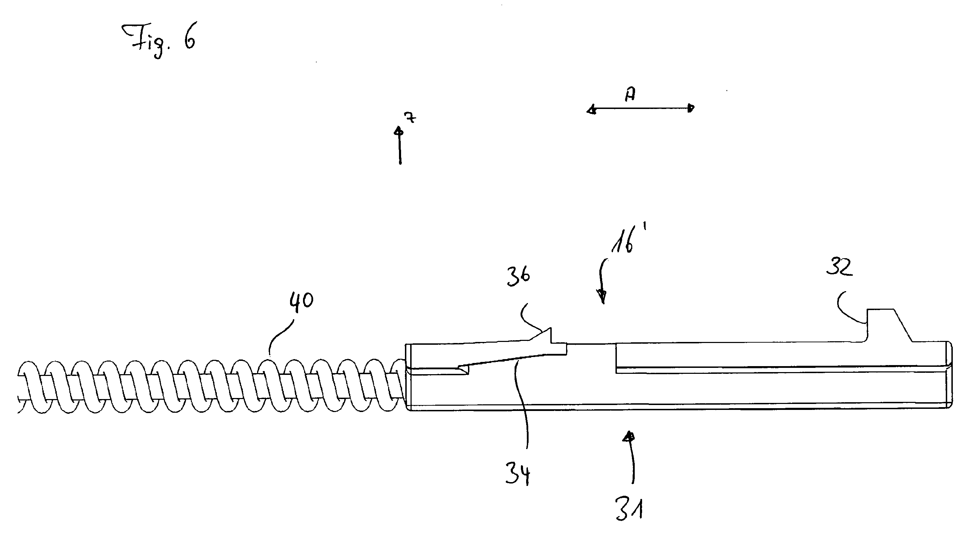

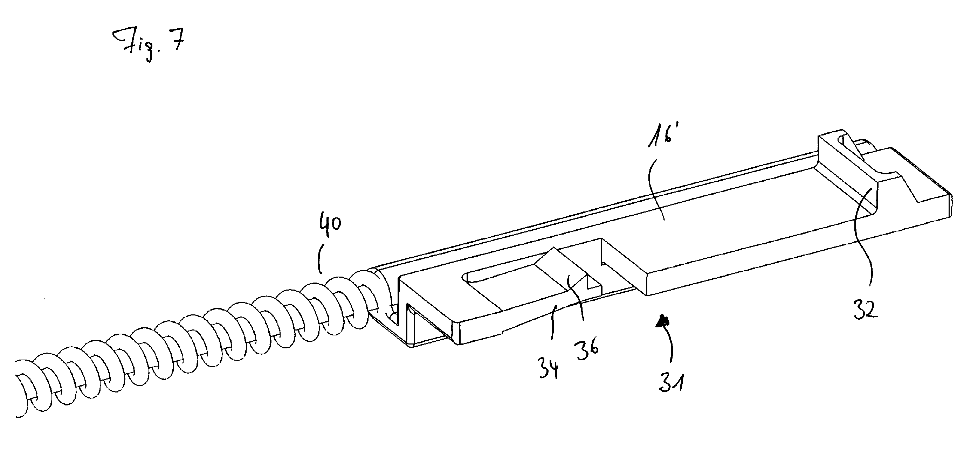

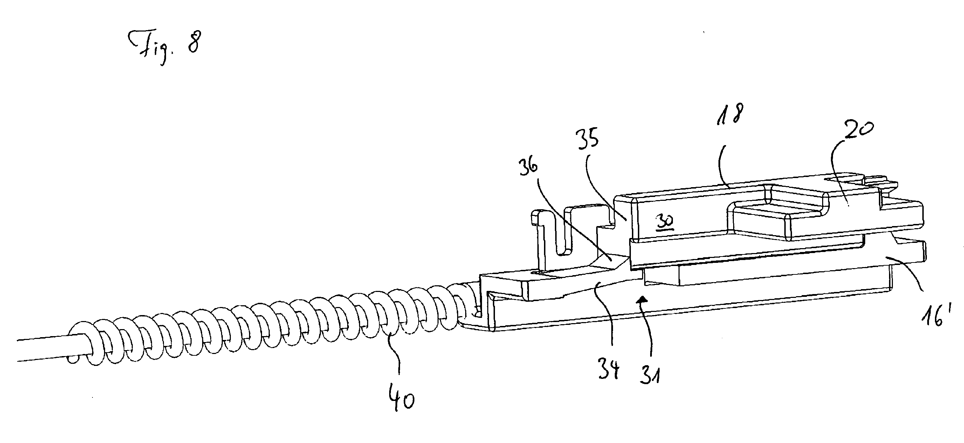

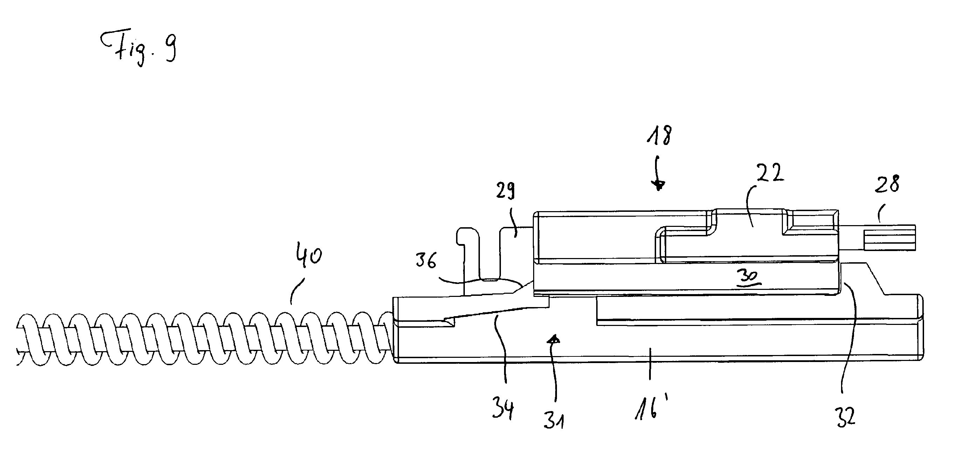

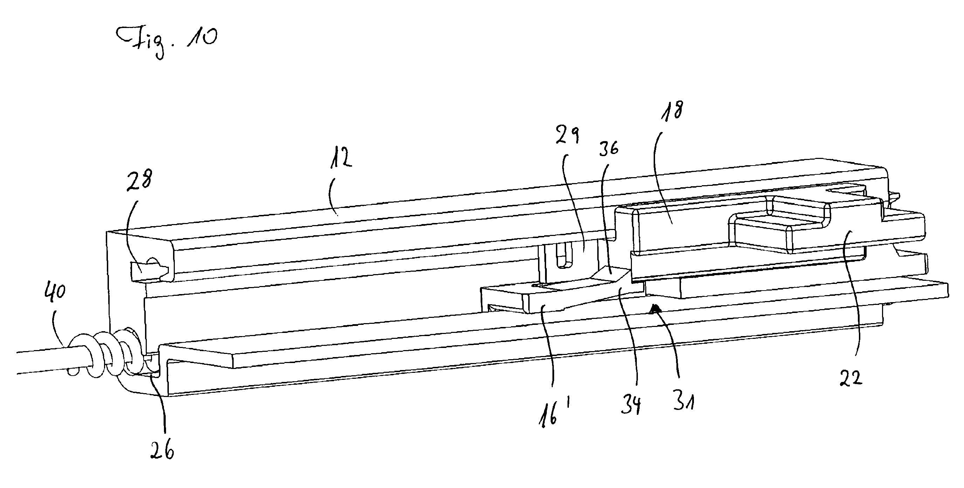

In der in den Figuren 5 bis 10 gezeigten Form ist an einem axialen Ende des Führungsstücks 16' ein Ende 38 eines Antriebskabels 40 angebracht, über das ein elektrischer Antrieb (nicht gezeigt) den Schlitten 14 und damit das Rollo bewegen kann. Ansonsten ist das Führungsstück 16' mit dem gerade beschriebenen Führungsstück 16 identisch. In beiden Fällen kann ein identisches Verbindungsstück 18 verwendet werden.

Das Ende 38 des Kabels 40, das auf bekannte Weise ausgebildet ist, ist bevorzugt einstückig im Führungsstück 16' aufgenommen. Dies kann zum Beispiel durch Vergießen oder Umspritzen erfolgen. Das Kabel 40 ist also unlösbar mit dem Führungsstück 16' verbunden.

Muß z.B. das Rollo ausgetauscht werden, kann das Kabel 40 mit dem daran befestigten Führungsstück 16' in der Führungsschiene 12 verbleiben, während das Verbindungsstück 18 aus der Führungsschiene 12 nach Lösen der Rastverbindung herausgezogen wird.

Der gesamte Schlitten 14, also sowohl das Führungsstück 16, 16' als auch das Verbindungsstück 18 bestehen in diesem Beispiel aus Kunststoff und sind spritzgegossen.

Natürlich kann die Rastverbindung auch durch eine umgekehrte Ausbildung realisiert werden, bei der der beschriebene Rastabschnitt am Führungsstück 16, 16' und das Rastelement am Verbindungsstück 18 ausgebildet ist. Allgemein gesprochen ist am Führungsstück 16 ein erstes Rastelement und am Verbindungsstück 18 ein zweites, komplementäres Rastelement vorgesehen, die eine lösbare Rastverbindung eingehen können, die das Führungsstück 16 und das Verbindungsstück 18, die zusammen den Schlitten 14 bilden, fest, aber lösbar aneinander koppeln.

| Bezugszeichen | Benennung |
|---|---|
| 10 | Schlittensystem |
| 12 | Führungsschiene |
| 14 | Schlitten |
| 16 | Führungsstück |
| 16' | Führungsstück |
| 18 | Verbindungsstück |
| 20 | Fortsatz |
| 22 | Spriegel |
| 24 | Abschnitt |
| 25 | Vorsprung |
| 26 | Führung |
| 28 | Führung |
| 29 | Vorsprünge |
| 30 | Rastabschnitt |
| 31 | Rastelement |
| 32 | Anschlag |
| 34 | Zunge |
| 35 | Stirnseite |
| 36 | Auslenkfläche |
| 38 | Ende |
| 40 | Antriebskabel |

## Patentansprüche

1. Schlittensystem eines verfahrbaren Sonnenschutzes in einem Kraftfahrzeug, mit einem Schlitten (14), der ein Führungsstück (16; 16') und ein Verbindungsstück (18) zum Sonnenschutz aufweist,
wobei das Führungsstück (16; 16') zerstörungsfrei lösbar mit dem Verbindungsstück (18) gekoppelt ist.

2. Schlittensystem nach Anspruch 1, **dadurch gekennzeichnet, daß** am Führungsstück (16; 16') ein Rastelement (31) ausgebildet ist, das so gestaltet ist, daß es mit einem am Verbindungsstück (18) ausgebildeten, komplementären Rastabschnitt (30) eine Rastverbindung eingehen kann, die das Führungsstück (16, 16') am Verbindungsstück (18) befestigt.

3. Schlittensystem nach einem der vorhergehenden Ansprüche, **dadurch gekennzeichnet, daß** ein Antriebskabel (40) vorgesehen ist, das mit dem Führungsstück (16') verbunden ist.

4. Schlittensystem nach Anspruch 3, **dadurch gekennzeichnet, daß** ein Ende (38) des Antriebskabels (40) unlösbar mit dem Führungsstück (16') verbunden ist.

5. Schlittensystem nach einem der vorhergehenden Ansprüche, **dadurch gekennzeichnet, daß** der Sonnenschutz ein Rollo ist.

6. Schlittensystem nach einem der vorhergehenden Ansprüche, **dadurch gekennzeichnet, daß** die Rastverbindung in einer Verschieberichtung (A) des Schlittens (14) geschlossen wird.

7. Schlittensystem nach einem der vorhergehenden Ansprüche, **dadurch gekennzeichnet, daß** das Rastelement (31) eine Zunge (34) aufweist, die in einer Richtung (z, y) senkrecht zu einer Verschieberichtung (A) auslenkbar ist.

8. Schlittensystem nach einem der vorhergehenden Ansprüche, **dadurch gekennzeichnet, daß** der Schlitten (14) in einer Führungsschiene (12) angeordnet ist und die Führungsschiene (12) das Führungsstück (16; 16') und das Verbindungsstück(18) quer zur Verschieberichtung aneinander sichert.

9. Schlittensystem nach einem der vorhergehenden Ansprüche, **dadurch gekennzeichnet, daß** die Führungsschiene (12) ein Lösen der Rastverbindung in einer Richtung (z, y) senkrecht zur Verschieberichtung (A) verhindert.

10. Schlittensystem nach einem der vorhergehenden Ansprüche, **dadurch gekennzeichnet, daß** das Rastelement (31) einstückig mit dem Führungsstück (16, 16') ausgebildet ist.

11. Schlittensystem nach einem der vorhergehenden Ansprüche, **dadurch gekennzeichnet, daß** der Schlitten (14) aus Kunststoff besteht.
